# EUROPEAN PATENT APPLICATION

(11) **EP 1 404 000 A1**
(43) Date of publication of application: **31.03.2004**
(21) Application number: 02425584.6
(22) Date of filing: 27.09.2002
(51) Int. Cl.: H02K 1/02, H02K 3/46, H02K 21/14, H02K 11/02, H02K 29/06

(54) **A compact servo motor**

(71) Applicant: Phase Motion Control S.r.l., 16141 Genova (IT)
(72) Inventor: Venturini, Marco, 16145 Genova (IT)
(74) Representative: Monti, Umberto

(57) **Abstract**

A compact unit comprising a servo motor, a position sensor and a drive card in a single enclosure (1,7). The motor design comprises a non-laminated material stator (20), formed as a thin ring, and a double insulation between motor winding and frame. The motor unit further integrates a drive card in the same size, form and protection of a standard servo motor.

## Description

The present invention relates to an electric motor assembly, and more particularly a brushless electric motor assembly adapted to provide a compact servo system in a motor enclosure suitable for multiple axis application with single wire control.

Computer controlled automatic machines needs physical actuators which generally comprise:
a servo motor, typically a brushless electric motor,
a position sensor, often assembled on the motor,
a central controller or control unit, and
a device known as "servo drive" which receives the actuation demand from the central controller, checks the actual position of the actuator through the sensor system, and adjusts the power transferred to the servo motor in order to execute precisely the actuation required.

Such a control system is effective but complex since it involves a significant amount of critical wiring between the above four members. This wiring must carry signals which need to be both accurate - since the accuracy of the actuation depends directly on the accuracy of the sensor readout - and to have a wide bandwidth, due to the fact that the servo performance of the system is critically affected by any time delay in the feedback loop.

This makes the wiring, and consequently the setup, of a servo system a specialist work, significantly more complex than, for example, wiring a computer network. Additionally, according to the state of the art, the servo motor is necessarily located on the actuated machine, while the servo drive is typically wired inside a control cabinet, often at a significant distance from the machine. It is generally considered impossible to place the drive together with the motor because of the size, the degree of protection, accessibility consideration and environmental requirements. Also the central controller is oftentimes located somewhere else.

The above discussed fragmentation of the control system, with a non standardised mix of analog and parallel digital signals running among components, often of different makes, results in a high installed cost per controlled axis, because each of the components involved must have a general purpose interface to communicate with the other two, and moreover the costs of installation and tuning are to be taken into account.

As a consequence, automatic machines such as for example packaging machines, which move and meter individual products, arrange them in a separately prepared package, and then fold and wrap the package, measure and label it, tend to be limited in the number of controlled axes, which generally are just a few. On the other hand, automatic machines need a large number of separate motions.

The standard solution until now was to group the required motions by some sort of mechanical linkage, e.g. belts, cams, leverages so that complex operations can be achieved with some degree of flexibility with a limited set of controlled servo motors. As an example, a typical packaging machine may consist of a main drive, connected to a timing belt or a master transmission shaft, which controls the motion of the product to be packaged and synchronises the operations of different processing stations; and of several processing stations, which perform different operations (dosing, cutting, wrapping etc) some of which may have separate servo motors to make the process more flexible.

A desirable architecture, which would join greater flexibility with higher productivity potential, would provide for a (linear or rotary) servo motor, directly driving each motion to be performed, thus eliminating all mechanical linkages and removing the consequent limitations, which are mainly caused by the flexibility, backlash and stick slip typical of all mechanical linkages, which in turn place an upper bound on the rapidity and accuracy of the action performed. This is however not possible with current technology because a machine with, say, 50 controlled axes would have such an amount of wiring and electrical cabinet complexity to be unmanageable from all viewpoints.

An additional problem with multiple axis control is that the amount of electromagnetic interference which is generated by each drive and each drive-motor cable would be multiplied by the number of drives inside the control cabinets to a value difficult to manage.

Yet another problem with the elimination of all mechanical linkages is determined by the different emergency shutdown behaviour of mechanical vs. electronic systems. In the former, the preset phase relationship between different actions is preserved even in the event of power interruption; in the latter, a power failure generally prevents electronic drives from any action including a safe shutdown where multiple motions may reciprocally interfere or damage the machine or the product.

It is therefore an object of the present invention to realise a single actuation unit, which accomplishes, in a single enclosure without inter-unit wiring, the three functions of drive, servo motor and sensor, which single package being not physically larger than a conventional servo motor of equivalent torque rating. This way the most significant hindrance to the assembly of the drive near the motor is eliminated, and the motor has the same high degree of protection and environmental requirement as those of the standard servo motors.

It is a further object of the invention to provide a single actuation unit which by virtue of its structure does not produce an amount of electromagnetic interference comparable with that intrinsic of standard servo motors, whereby several units can be clustered on a single machine without need of complex wiring/filtering.

It is a further object of the present invention the development of a single actuation unit which embodies all force, speed and position sensing and feedback signal processing so that the communication between such unit and the central machine control is limited to the transmission of a target setpoint, thus limiting the speed and resolution requirement of the communication channel to that of the mechanical system being controlled, and in which this communication is carried on a multi drop serial communication link such as for example an RS 232 o USB serial communication channel.

A further object of the invention is the realisation of a set of integrated servo packages as above described which are suited to provide a orderly shutdown in the event of emergency or power fail, and which are able to retain the required phase relationship during such event at least down to a speed significantly lower than the operational speed.

The invention achieves the above objects through a brushless electric motor assembly as claimed in claim 1. Additional advantageous features are recited in the dependent claims.

The invention realises a single package for a the brushless servo motor which embodies multiple functions with a density of the individual functions higher than hitherto achievable.

The known conventional motors employ a multiphase stator made of a stack of stamped laminations carrying a set of slots, in which "lap" windings, i.e. windings which overlap several slots, are inserted manually or mechanically. The disposition of magnet wire thus inserted is by definition random and the fill factor of the motor slots rarely exceeds 40%. At the same time, the coil ends, which are non active magnetically and thus represent a pure energy loss, are as long as the number of slots which are overlapped by the winding.

The motor according to the invention provides for a single coil. The realisation of a motor in which a single coil embraces a single tooth has been known for some time, see for example EP 1 215 029 in the name of the same applicant, but the application of such a design, which would reduce the length of the coil ends and avoid the overlap of coils, has been limited by the following two practical problems:
- in such a design, the pole number of the motor is nearly the same as the number of slots; consequently, either the motor maximum speed is very low, or the number of teeth is limited thus limiting the performance of the machine, or the running frequency is very high causing excessive core loss in the laminations and significant tuning problems in the drive. In fact, in the known art, such motors are generally limited to a 12 slot design and to a miniature size. Without excessive detail, the magnetic and thermal design of a high performance machine requires critically a higher slot number, so that limiting the design to a small number of slots cancels out almost completely the advantage of the single tooth winding;
- the realisation of a layered, ordered single tooth winding with a high copper density cannot be carried out on a slotted structure, because a layered winding requires free space around the winding for the machine to operate. In fact, it requires the ability to wind a single tooth separately. This is possible but it involves stamping a very large number of miniature "tooth" laminations, stacking them into teeth by riveting, welding or interlocking, all of which are expensive options, winding them, and then stacking them again. Also the complexity of this process plays against a large tooth number.

A brushless electric motor according to the invention further includes a thermal insulator, which carries inside both the position sensor and the servo drive card, both of which are insulated by the motor heat by the thermal insulator part, and which exchanges heat with the environment through a separate heat sink.

The invention will now be disclosed hereinbelow with reference to the accompanying drawings illustrating preferred but non limiting embodiments thereof, in which:
Fig. 1 is a cross section view of a brushless electric motor assembly according to the present invention;
Fig.s 2A and 2B are a perspective scrap view and a cross section view respectively of a stator tooth of a brushless motor according to the present invention;
Fig 3 schematically illustrates a magnetic circuit of the motor;
Fig. 4 schematically illustrates a pole arrangement;
Fig. 5 is a schematic diagram of a motor of the invention using a DC power bus;
Fig. 6 is a schematic diagram of a motor of the invention using a matrix converter (AC-AC).

Throughout all the Figures the same references are used to indicate equal or functionally equivalent components. The invention is now described with reference to the Figures.

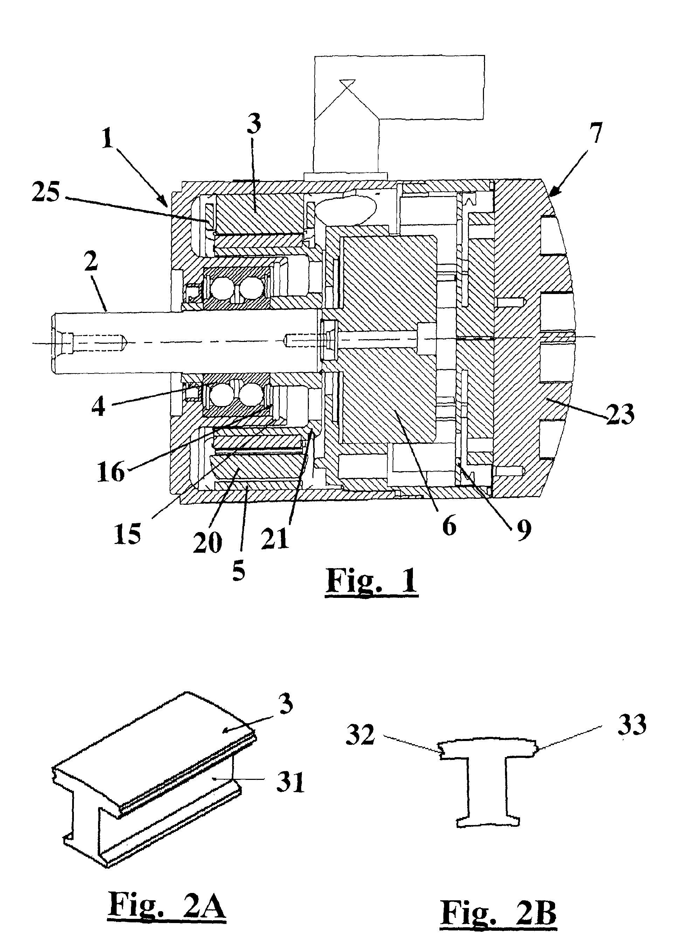

With reference first to Fig. 1, a brushless electric motor assembly according to the present invention comprises a stator 20 and a rotor 21 housed in an enclosure formed by a pressure die casting box-like casing (or front flange-frame) 1 and a cover 7. The rotor 21 is fitted to a protruding shaft 2. The stator 20 comprises teeth 3 formed by pressing a ferromagnetic powder into a tooth shape as shown in Figs. 2A and 2B and coils 25. In accordance with a preferred embodiment of the invention, each tooth comprises a stem 31 and two lateral indents 32 and 33 co-operating to ensure an accurate concentricity of the assembly.

Since a powder metal tooth has intrinsically less eddy current loss than a lamination tooth, the motor of the invention can operate at a higher frequency. Additionally, the pressing of the tooth produces one component part in a single operation without material wastage, and this is crucially different from having to stamp many individual laminations in a tooth shape and them stacking them together.

The coils 25 embrace one tooth at a time and are arranged in such a way that the pole pitch of the rotor is only slightly different from the slot pitch of the stator 20, so that all consecutive coils generate a back-EMF which is in opposition between each one and a next with the addition of a slight phase displacement.

The coils are then placed in antiseries in sets so that the consecutive back EMF components of each coil are composed to generate the three phases at 120 electrical degrees apart.

Thus the invention overcomes the above discussed limitation of tooth winding, i.e. that designs with many teeth are impractical to manufacture and suffer excessive eddy current losses due to high frequency operation. Moreover, by adopting a high frequency design, the motor magnetic jokes are very thin so that the motor radial thickness is about half that of a conventional six or eight-pole servo design of corresponding torque rating and air gap. In particular, the stator is thin enough in the radial direction that bearings can be mounted inside the rotor instead of being axially located at either side thereof.

In the assembly according to the invention the motor is consequently radially thin enough that the motor bearings can be placed concentrically to the motor structure and fastened to a single front flange-frame member 1, doing away with the need of a rear support. Consequently, thanks to the innovative material and manufacturing process according to the invention, enabling high frequency and thin ring design, a different geometry (bearings inside instead of located on either side of the rotor) can be obtained that would have not been otherwise possible, and this results in further space savings in the motor axial size.

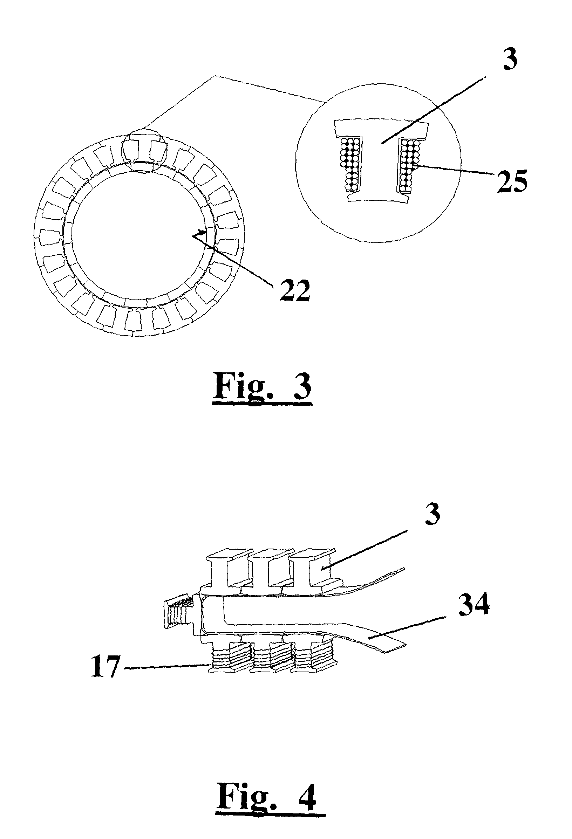

The magnetic circuit of the motor is schematically shown in Fig. 3, with the enlarged detail showing a tooth with coil leads and resin. The rotor is thus designed as a thin ring. The large axial hole 22 (see Fig. 3) of the thin ring is used to house a bearing set 4, typically a double contact angular ball bearing, a preloaded spring 16 and a sealing ring 15. Motors of the know art have two bearings fixed at either side of the stator, whereas according to the invention a single bearing is affixed to the motor front flange but laying in the same plane as the motor active part. This construction has several advantages.
- It is much shorter than a conventional motor of same torque in that the length of both bearings and the length of the coil ends is eliminated; this result in a typically 50% length saving, which creates the space needed for the drive;
- a single bearing with dual contact construction, in a single seat, is intrinsically more accurate than a structure with two separate bearings;
- the need for a frame and a rear end bell is removed to the advantage of construction ease and drive assembly in the rear of the motor.

In a preferred embodiment of the invention, in order to speed the winding and minimise connection, the individual poles are arranged in phase sets as schematically shown in Fig. 4. For example for a 21 slot design, 3 phase sets of 7 teeth each are connected by a temporary tape 34 and placed in a suitable jig so that they are wound together, without interruption, on a layered winding machine. In one realisation of the invention, the winding is performed with self cementing impregnated magnet wire. The phase sets are then placed consecutively in a round jig and current is passed briefly through the winding to cure the impregnation resin.
The stator coil 17 is formed about each tooth before the tooth is fitted inside the aluminium casing.
A thin sheet 5 of insulating material such as a Mylar sheet is positioned between the teeth and the casing 1 so as to form a second insulating barrier towards the outer ground. More precisely the round stator thus obtained is wrapped in a heat shrinkable Mylar tube or sheet 5 and the whole assembly is inserted into the motor front flange-frame 1 which has been previously heated. This way a double insulated motor is obtained.

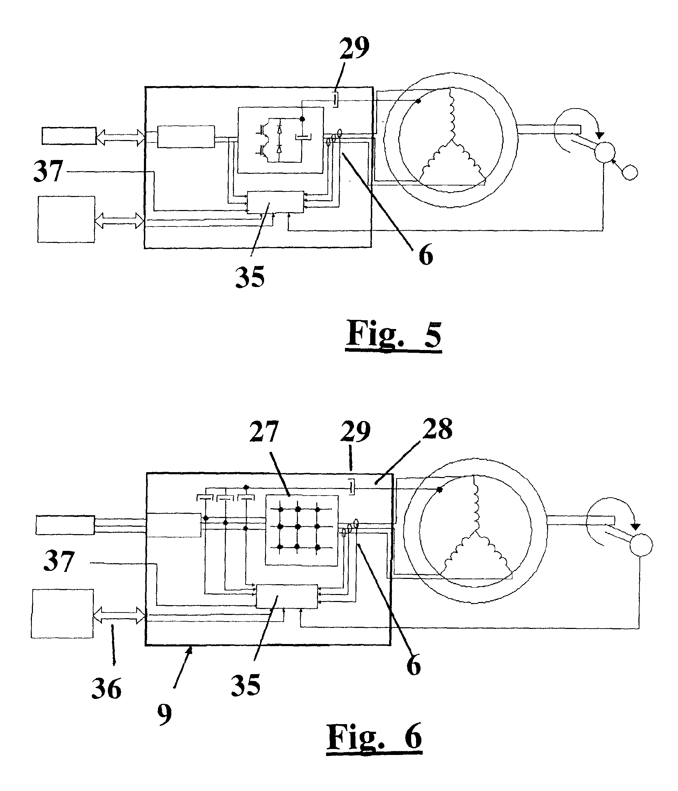

According to a preferred embodiment of the invention the teeth potential, which is isolated from the motor frame, is returned to the power drive via a bypass capacitor in order to shunt unwanted electromagnetic interference. More precisely, referring to the diagram of Fig. 6, a wire 28 is fed from the set of the motor pole pieces, which is insulated from the frame, to the DC link of the built-in inverter drive 27 via a bypass capacitor 29 thus shorting the unwanted high frequency components of the drive voltage, which are normally coupled capacitively to the motor frame, back to the drive and minimising EMI interference without further filtering. A motor with a very short form factor and with EMI suppression has thus been realised.

In accordance with a further aspect of the invention, the casing is completed by a thermally insulating member 18, which may be transparent for diagnostic purposes, and which carries the position sensor 6, and decouples the heat from the motor portion from the drive.

In a preferred embodiment of a brushless electric motor assembly of the invention, the servo drive card 9 is bi-directional and is fed from a common DC bus in order to exchange regenerated power with other motors and to guarantee a safe shutdown in case of power failure through controlled braking. Such drive card 9 is built with the matrix converter topology so that the energy flow is bi-directional in order to exchange regenerated power with other motors and to guarantee a safe shutdown in case of power failure through controlled braking.

The motor drive card 9 is located inside this separator member 18 and the drive power module is assembled on a separate heat sink 23 which is located in the back of the motor. The drive card 9 is located on the back of the motor and the position information to be supplied to the card in order to control the shaft speed and position are supplied by the sensor 6 comprising a suitable detecting device secured to the motor shaft 2 by means of a screw or similar device ensuring its proper centring.

With reference to Fig. 6, the servo drive is based on a DSP 35 which processes the motor sensor information, which in the illustrated embodiment is a multiturn absolute encoder 6, and creates a Pulse Width Modulated waveform which controls motor torque, speed and position. The drive thus closes a position loop. Drive parameterisation is carried through a serial bus connection, in this case a CAN bus 36. Drive Control is performed via the same serial bus, on which successive position targets are sent by the system Control to the target drive at constant time intervals. The drive interpolates the position targets and thus reprocesses a position trajectory which is used as position reference for the internal servo loop. Since all feedback loops are internally processed, the communication speed required of the bus is comparable to the mechanical bandwidth of the system, and therefore a information rate in the range of 1 msec, which is within the capability of the CAN bus, is adequate and the need for an extra fast bus is avoided.
For safety purposes, an additional hard wired interlock signal 37 is accepted apart from the field bus, which guarantees instant deenergizing of the motor irrespective of bus status. The signal can be run in parallel on multiple motors.

In order to operate as a full servo, the drive must be capable of bi-directional energy flow, so that in smaller units a DC power bus is used (Fig. 5) while in larger units a matrix converter AC-AC 27 which is intrinsically bi-directional is used as shown in Fig. 6. The bidirectionality of the drive is used to co-ordinate shutdown in the event of power failure, because when the line fails, the motor with the highest inertia load on a given system is braked in order to provide bus power to the other units in the system until all the drives reach zero speed at the same time.

## Claims

1. A brushless electric motor assembly comprising:
a stator (20) equipped with stator coils (25), and a rotor (21) housed inside an enclosure (1, 7), at least one bearing device (4) for supporting said rotor, said stator (20) being formed as a multi-pole thin ring with a plurality of teeth (3) formed by pressing a ferromagnetic powder into a tooth shape, said stator coils comprising coils (25) embracing one tooth (3) at a time.

2. A brushless electric motor assembly as claimed in claim 1, **characterised in that** said stator coils (25) are arranged in such a way that the pole pitch of the rotor is only slightly different from the slot pitch of the stator whereby the consecutive coils generate a back-EMF which is in opposition between each one and a next with the addition of a slight phase displacement.

3. A brushless electric motor assembly as claimed in claim 1 or 2, **characterised in that** said coils (25) are then placed in antiseries in sets so that the consecutive back EMF components of each coil are composed to generate the three phases at 120 electrical degrees apart.

4. A brushless electric motor assembly as claimed in claims 1 to 3, **characterised in that** said at least one bearing device (4) for supporting said rotor is mounted inside said rotor (21), concentrically to the motor structure and fastened on a single front flange-frame member (1).

5. A brushless electric motor assembly as claimed in the preceding claims, **characterised in that** said enclosure comprises a box-like casing (1) and a cover (7).

6. A brushless electric motor assembly as claimed in the preceding claims, **characterised in that** all said wound teeth (3) are assembled inside said casing (1) enveloped by an insulating member (5), such as a heat shrinkable material, between said stator and casing (1).

7. A brushless electric motor assembly as claimed in the preceding claims, **characterised in that** the teeth potential, which is isolated from the motor frame, is returned to the power drive via a bypass capacitor (29) in order to shunt unwanted electromagnetic interference.

8. A brushless electric motor assembly as claimed in the preceding claims,, **characterised by** housing within said enclosure (1, 7) both the position sensors (6) and a compact servo drive card (9), which exchanges heat with the environment through a separate heat sink (23), as well as a servo drive card exchanging tuning, control and diagnostic signals with the main controller via a multi drop serial field bus.

9. A brushless electric motor assembly as claimed in claim 8, **characterised in that** said built-in servo drive card utilises a CANOpen filed bus compatible with existing intelligent I/Os and **in that** said built-in servo drive card, in addition to the filed bus, also carries a hardwire signal (37), to force a safety stop irrespective of bus status for safety purposes, and **in that** it includes a thermal insulator, which carries inside both the position sensor (6) and the servo drive card (9).

10. A brushless electric motor assembly as claimed in the preceding claims, **characterised in that** the servo drive card (9) is bi-directional and is fed from a common DC bus in order to exchange regenerated power with other motors and to guarantee a safe shutdown in case of power failure through controlled braking, and **in that** said servo drive card (9) is built with the matrix converter topology so that the energy flow is bi-directional in order to exchange regenerated power with other motors and to guarantee a safe shutdown in case of power failure through controlled braking.
